# EUROPEAN PATENT SPECIFICATION

(11) **EP 3 560 795 B1**
(45) Date of publication and mention of the grant of the patent: **21.06.2023**
(21) Application number: 19170946.8
(22) Date of filing: 24.04.2019
(51) Int. Cl.: B62D 11/20, B62D 55/065, B62D 55/084, B62D 55/116

(54) **SELF-PROPELLED DEVICE FOR ENTERING AND MOVING SPECIFIC EQUIPMENT INSIDE CONFINED ENVIRONMENTS WITH MUDDY SEDIMENTS ON THE BOTTOM**
SELBSTFAHRENDES GERÀT ZUM EINFAHREN UND BEWEGEN SPEZIFISCHER AUSRÜSTUNGEN INNERHALB VON BEENGTEN UMGEBUNGEN MIT MATSCHIGEN BODEN
DISPOSITIF AUTOPROPULSÉ POUR INSERTION ET DÉPLACEMENT D'ÉQUIPEMENTS SPÉCIFIQUES À L'INTÉRIEUR D'ENVIRONNEMENTS CONFINÉS ET SUR SOLS POLLUÉS

(30) Priority: 26.04.2018 IT 201800004883
(43) Date of publication of application: 30.10.2019
(73) Proprietor: Gerotto Federico S.r.l., 35011 Campodarsego PD (IT)
(72) Inventor: Feletto, Alberto, 35011 Campodarsego PD (IT); Gerotto, Alessandro, 35011 Campodarsego PD (IT); Gerotto, Gastone, 35011 Campodarsego PD (IT); Gerotto, Roberto, 35011 Campodarsego PD (IT)

(56) References cited:
- WO-A1-2014/182219
- WO-A1-2016/199176
- JP-A- S63 203 483
- US-A- 5 125 467

## Description

The object of the present invention relates to a self-propelled device for entering and moving specific equipment within confined environments with muddy sediments.

Examples can be seen in WO2016/199176A1, US5125467A and JPS63203483A. A self-propelled device for entering and moving specific equipment inside confined environments with a muddy sediment on the bottom is shown in WO 2014 / 182219 A1, which discloses the preamble of claim 1.

### Prior art

In large industrial plants there are often above-ground storage tanks with vertical cylindrical wall and flat bottom manufactured products in which equipment can only enter through lateral manholes with a 600 mm useful passage; in general, only suitably sized remote-controlled hydraulic self-propelled vehicles can pass through a 600 mm diameter hatch and are able to overcome the difference in height using an up and down ramp.

Moreover the insides of the tanks are confined spaces classified as Atex zone 0 environments at risk of explosion and therefore the use of no man-entry solutions with suitable Atex marking is mandatory to remove the sediment and subsequently carry out cleaning activities.

Such storage tanks must be cleaned periodically because over time and use a muddy sediment forms on the bottom; cleaning consists mainly of the removal of this sludge.

For the aforementioned requirements and with the aforementioned limitations for cleaning such tanks, the relative equipment is inserted and moved inside supported by the above-mentioned hydraulic self-propelled vehicles. The type of self-propelled vehicle that has been found to be the most suitable for these operations are those moved by a pair of tracks some distance from each other, but even with this equipment self-propelled vehicles are not completely suitable as their mobility is very limited and difficult due to the low friction and the uneven thickness of the sediment, which makes it difficult for the tracks to get a grip, with the consequent objective difficulties of moving forward and changing direction with a small turning radius.

On slimy surfaces the traditional crawler track steering system is extremely inefficient because the static friction conditions are easily lost turning into a skidding situation.

Even if, then, self-propelled crawler vehicles have better traction characteristics than wheeled vehicles, however, compared to wheeled vehicles, self-propelled crawler vehicles suffer from greater rigidity when changing direction.

In smaller crawler machines, the steering carried out with the traditional system of separately controlling the right track from the left one is not very effective in changing direction due to the reduced leverage between the tracks and to a high friction resistance of the track towards the ground when changing direction. The problems of changing direction are all the more important the smaller and narrower the distance between the tracks is and the longer the tracks are in their longitudinal extension.

The traction of a tracked self-propelled crawler vehicle depends on the part of the supporting surface that really is in contact with the bottom of the tank, but this is extremely difficult inside a tank where there is sediment of variable thickness that can also be composed of sands. Sometimes the equipment supported by said self-propelled vehicle means that the self-propelled vehicle itself assumes an inclined position and therefore does not adhere to the support surface.

The possibility for a self-propelled vehicle to be able to change direction with a limited curvature radius is of strategic importance to moving efficiently within a confined space and to bypassing the support columns of the floating roof, something frequently present in these environments; the current solutions on the market are limited in their steering radius because of the difficulty for the tracks to carry out the counter rotation on a slippery surface such as a tank where there is sludge on the bottom.

The entry into and exit from a tank through a 600mm manhole of a self-propelled crawler that supports a long and heavy piece of equipment is critical if it is not managed taking into account the possibility of the operator making incorrect manoeuvres; a self-propelled vehicle that supports rigid equipment can correct its direction only by acting on the different speed of the tracks, but it is difficult to make sensitive manoeuvres, and an excessively abrupt command by the operator can lead to an markedly abrupt change of direction, possibly causing everything to overturn, the crawler and related equipment being supported.

When a self-propelled crawler is facing a very steep slope up or down ramp, it only touches two points, one of which is on the ramp and the second on the horizontal plane: in this situation it is very difficult to transmit the traction torque and it is very difficult to correct the direction.

### Object of the invention

The object of the present invention is therefore to overcome one or more drawbacks of the prior art.

In particular, it is an object of the present invention to make available an optimised highly mobile device specifically designed for confined spaces (hereinafter also undercarriage).

An important object of the present invention is to make available an undercarriage device which can pass through a manhole with a useful passage of 600 mm.

An equally important object of the present invention is to make available an undercarriage device which can operate in the Atex 0 zone at risk of explosion.

A further object of the present invention is to make available an undercarriage device whose movement, especially in the change of direction with a small curvature radius, is extremely flexible without incurring sliding.

An important object of the present invention is to make available an undercarriage device which can easily face a very steep up or down ramp easily supporting the relative equipment in conditions of reliable manoeuvrability.

All the aforesaid objects and others which will become more apparent from the continuation of the description are attained with the invention characterised by the features highlighted in the claims.

### Explanation of the invention

All the aforementioned objects and others which will become more apparent in the course of the explanation are attained by an optimised highly mobile device specifically designed for confined spaces, composed of two crawler undercarriages spaced apart from each other and in succession, which together at the top support a mechanical constraint for transporting longitudinal rigid equipment.

By rigid longitudinal equipment is meant apparatus dedicated to the function to be performed within said confined environment and which must reach the various parts of said confined environment to carry out the functions for which it is intended, specifically cleaning operations.

Since each undercarriage consists of a structure with tracks on the side, whose overall width is less than 600 mm, and in the upper part having a constraint by means of a device connecting with the rigid longitudinal structure of the apparatus.

Said two undercarriages are independent of one another, since the relative tracks can be remotely controlled individually.

### Advantageous characteristics of the invention

Advantageously the connection between each undercarriage and the rigid longitudinal structure of the apparatus occurs by means of a hydraulic cylinder, which carries out the steering with the rotation of the front undercarriage and of the rear undercarriage managing them as two steering axles, thereby succeeding in attaining a flexible management of the change of direction.

Advantageously, said hydraulic cylinder acts on a coupling ring between the undercarriage and the apparatus, realising a reciprocal rotation of the mechanical joint.

Advantageously, steering can take place in combination with the rotation of the aforesaid coupling, set in rotation by said hydraulic cylinder, connecting each undercarriage with the structure of the apparatus, together with a differentiated movement between the right track and the left track of each undercarriage, further limiting the possibility of a track sliding with respect to the surface it is moving on.

Advantageously, each track of an undercarriage is articulated with respect to the structure of the undercarriage according to a movement along the longitudinal plane of the undercarriage and can therefore always rest on the work surface, even if the surface is irregular or has sudden uneven areas.

Advantageously, an undercarriage comprises a lever, hinged at a first end to the structure of the undercarriage and hinged at the opposite end to said mechanical joint which rotates the apparatus, said lever being rotated by a hydraulic piston joined in a first point of application to the structure of the undercarriage and in a second point of application to said lever, where said lever, following a partial rotation, is capable of lifting said mechanical joint.

Said mechanical joint is configured as a basic bearing by means of which the undercarriage is rotated during the steering movement, and furthermore the height is raised with respect to the undercarriage structure by means of the rotation of the lever hinged on one end to the carriage, with an axis of rotation perpendicular to the carriage, since said mechanical joint is hinged at the opposite end in a freely oscillating manner.

Since the configuration of the equipment is long and rigid, the connection with the two hydraulic cylinders, which rotate the relative undercarriage to which they are joined, and which are raised by the relative lever system, allows the superstructure installed on the self-propelled vehicle to rise up and lower when going up and descending the ramp, providing the relative undercarriages with the best possibility of adapting to the relative slopes of the up ramp and the down ramp.

### Brief description of the drawings

The technical characteristics of the invention, according to the aforementioned objects, can be clearly seen from the content of the claims below and the relative results will be apparent in the detailed description that follows with reference to the drawings, which illustrate a purely exemplary and non-limiting embodiment, in which:

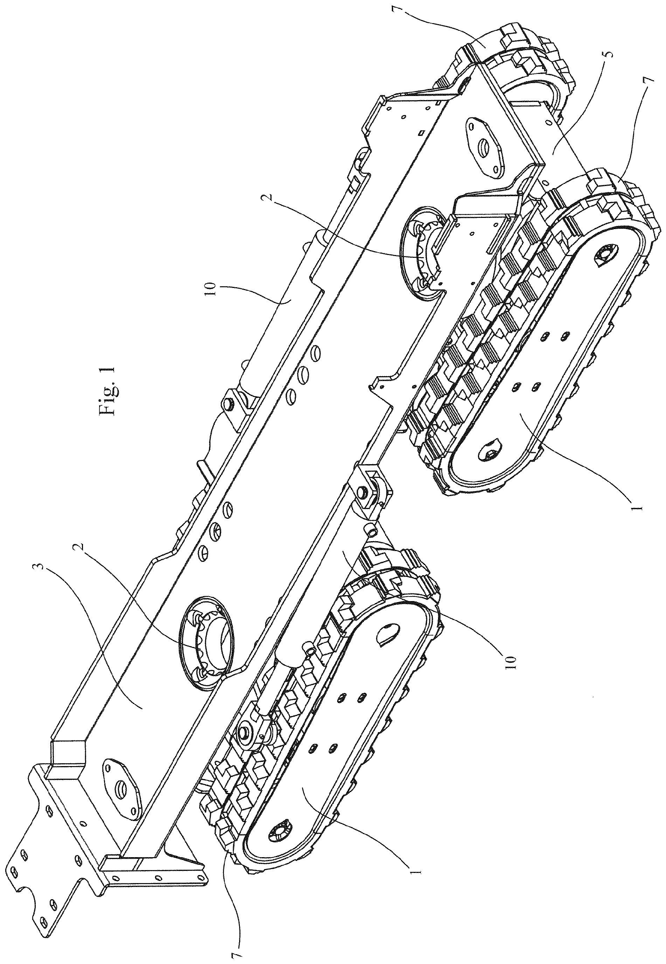

fig. 1 shows the self-propelled device that is the object of the invention from a perspective view, which comprises two undercarriages that are aligned, spaced apart and in succession, and which jointly support a superstructure;

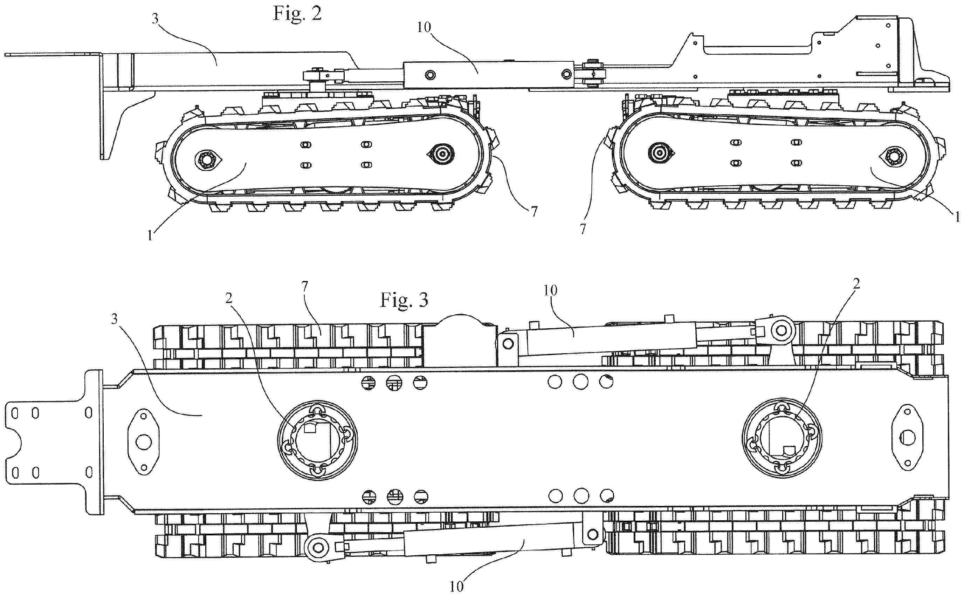

figures 2 and 3 show the device of fig. 1 from a lateral plan view and a plan view from above, showing the spaced apart succession of the two undercarriages;

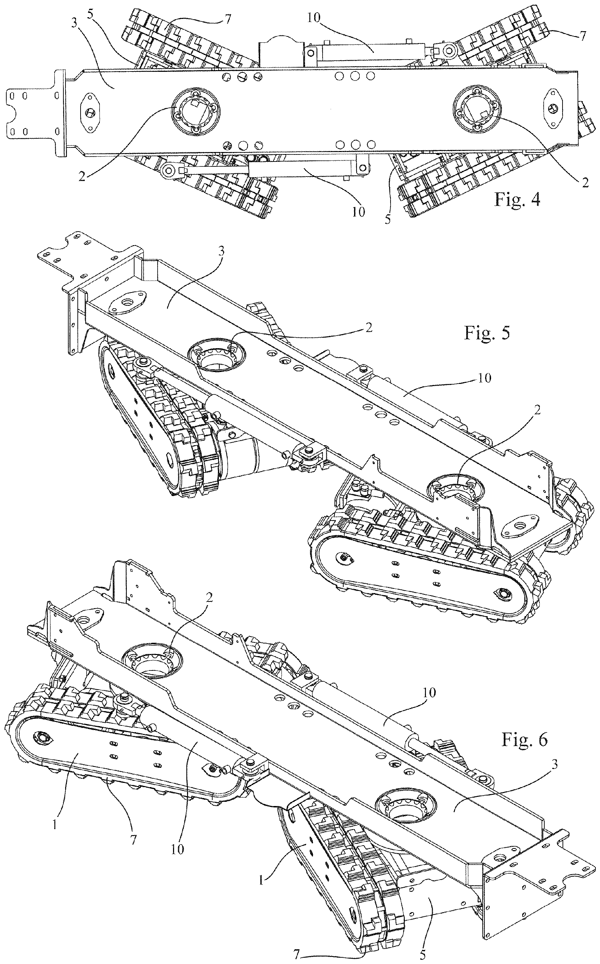

figures 4, 5 and 6 show, from different points of view, by way of example, a possible configuration of the undercarriages angled in relation to one another, so that the progress of the superstructure follows a very narrow curved trajectory; in these figures the opposite state of the hydraulic cylinders on the sides of the superstructure is evident;

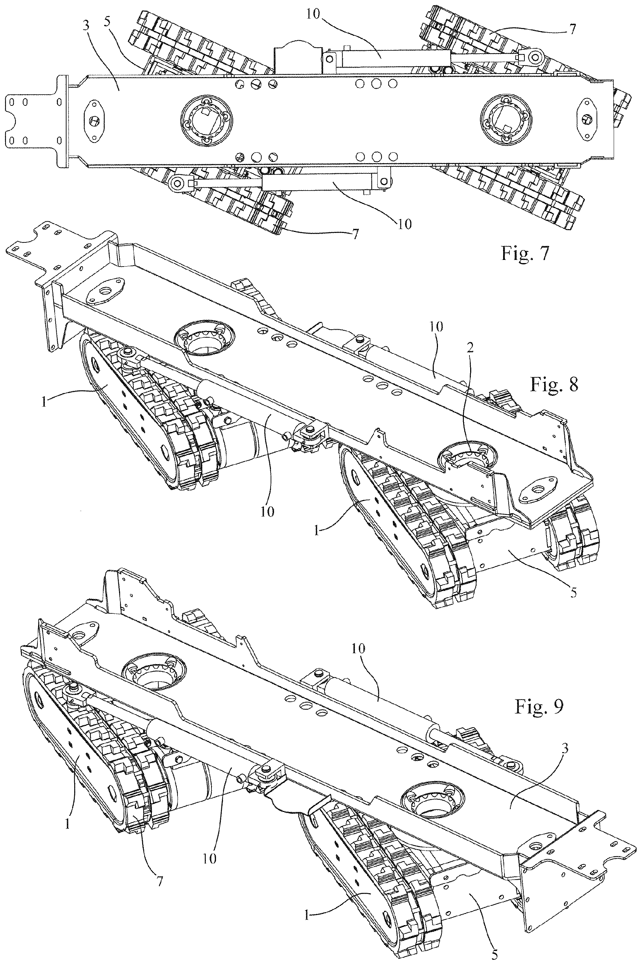

figures 7, 8 and 9 show, from different points of view, by way of example, a further possible configuration of the parallel and staggered undercarriages, so that the advancement of the superstructure takes place with a rectilinear and oblique trajectory (with reference to the linking axis between the two undercarriages); in these figures the concordant state of the hydraulic cylinders on the sides of the superstructure is evident;

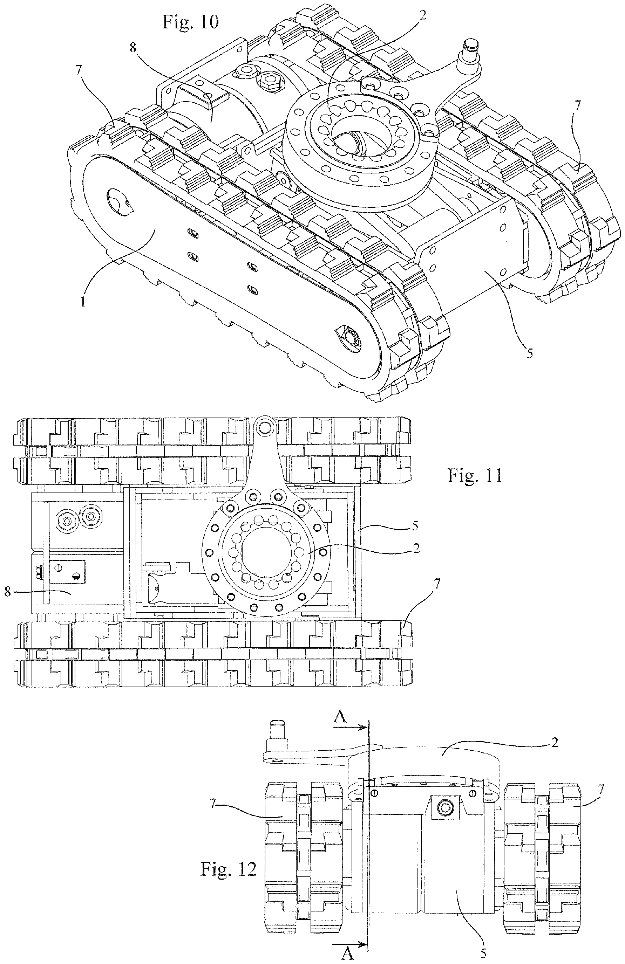

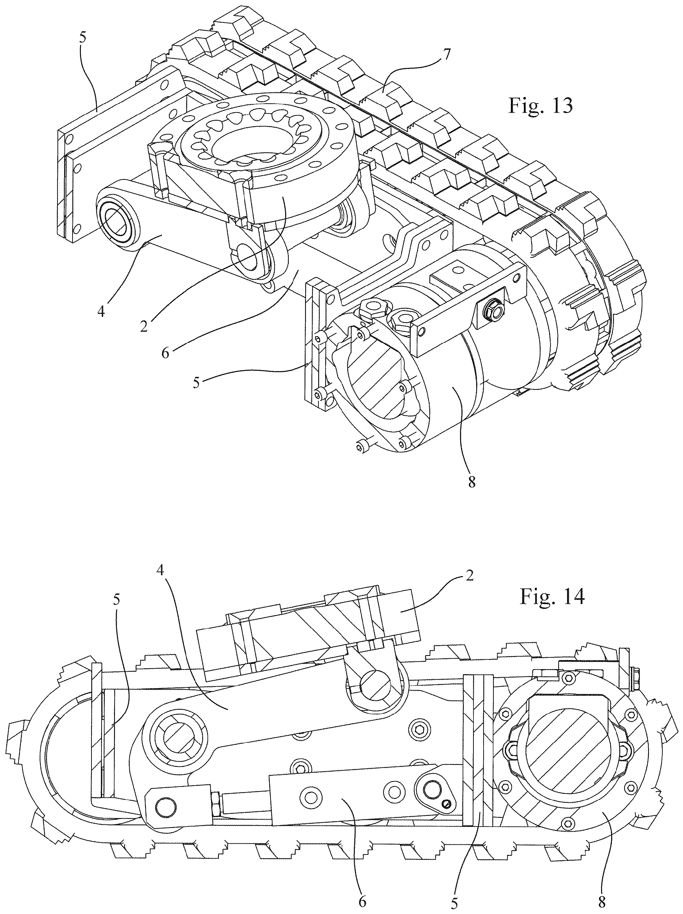

figures 10, 11 and 12 show in detail, from different views, a single undercarriage, in which the coupling ring is in a lowered condition; figures 13 and 14 are sectional views, along a plane AA identified in figure 12, of the undercarriage, highlighting the lever mechanism constituted by the lever for raising the mechanical joint hinged at the end of said lever in a freely oscillating manner;

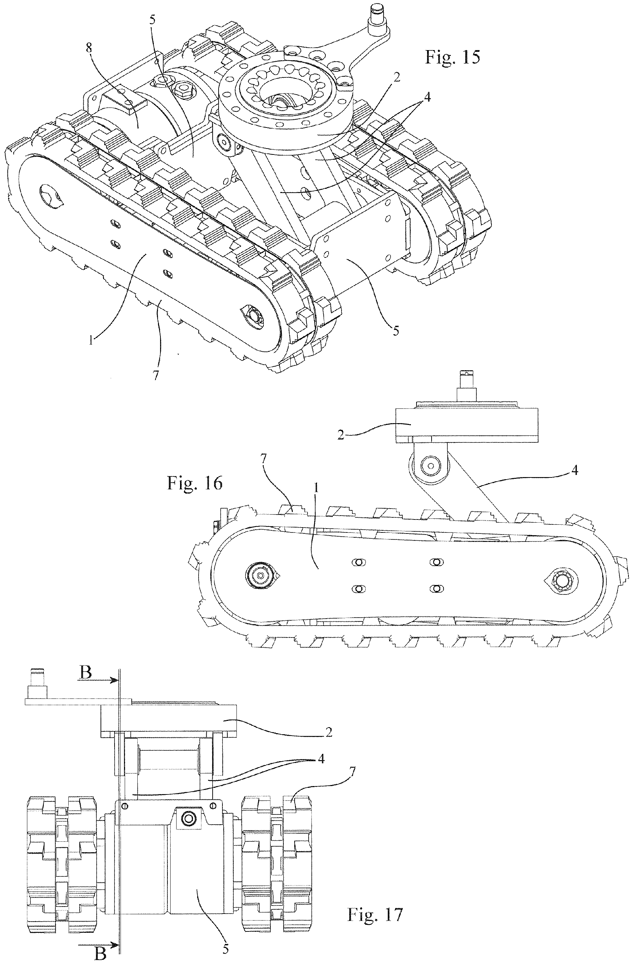

figures 15, 16 and 17 show in detail, from different viewpoints, the undercarriage of figure 10, with the coupling ring in a raised position with respect to the structure of the carriage;

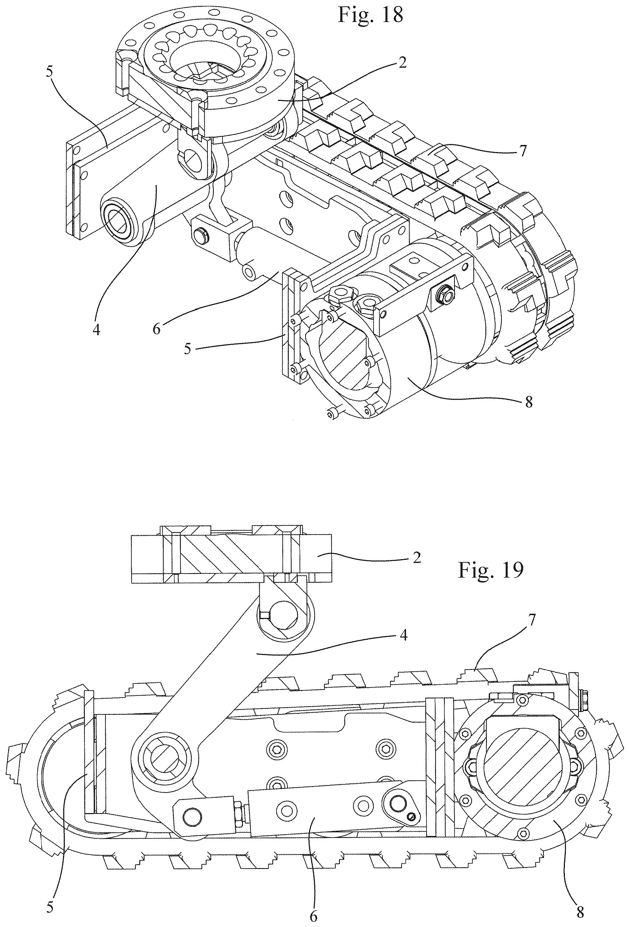

figures 18 and 19 are sectional views, along a plane BB identified in figure 17, of the undercarriage, highlighting the lever lifting mechanism of the lever, actuated by the hydraulic actuator;

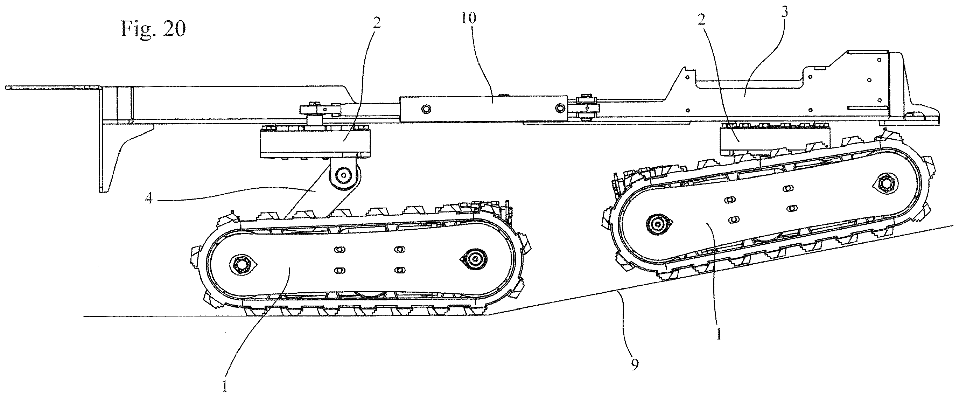

figure 20 shows, from a side plan view, the ability of the device of the invention to easily overcome a ramp, with an extended and slender superstructure, keeping the tracks of the undercarriages completely grounded for safe manoeuvrability during such manoeuvres.

Detailed description of an exemplary preferred embodiment With reference to the drawings, the realisation refers to a machine designed to enter and move inside hydrocarbon tanks with a specific traction system, moving sediment removal and cleaning systems specifically designed to be able to operate in an explosive environment without the aid of the operator, all controlled exclusively remotely. The system has been designed to avoid the need for the operator to enter the above-mentioned environments. In fact the machine must be able to move with narrow bending radii to get around the support columns of the floating roof or other obstacles normally present inside process or storage tanks.

The primary and main characteristics can be summarised as:
- □ double undercarriage system 1 with proportional traction and steering control;
- □ interposition between each undercarriage 1 and the relative superstructure 3 of a hydraulic cylinder 2 for the relative steering rotation;
- □ interposition between each crawler 1 and the hydraulic cylinder 2 of a lever system, with a lever 4 hinged with a transverse axis on the structure of the carriage 5 and with the opposite end that supports said articulated joint 2 in a freely pivoting manner, where said lever is moved to perform a partial rotation by a hydraulic actuator 6 for lifting the superstructure 3 with respect to the relative undercarriage 1.

Moreover the device has an optimised construction to go along a passage limited to 600mm with a superstructure mounted and that has an inclination along a vertical longitudinal plane of each track 7 on each individual undercarriage 1 to bring the track 7 into adherence in the eventuality of a uneven bottom.

Other characteristics of the undercarriage system of the invention which allow the manoeuvrability, traction and steering to be improved and optimised are listed below:
The system is equipped with proportional traction and steering control, to facilitate movement without slipping and/or loss of contact with the floor;
The control system is proportional with controlled acceleration so as not to enter with the rubber of the tracks 7 in the dynamic friction regime.

The front undercarriage 1 and the rear undercarriage 1 twists and turns on the horizontal surface by means of two independent mechanical joints 2, moved by corresponding hydraulic cylinders 10, so as to have a small radius of curvature of the machine even in the event of a slippery surface.

The two undercarriages 1 have a mechanical suspension system that provides a longitudinal free movement in order to adapt to the irregular surface of the bottom of the tanks and therefore optimise traction.

The system has been optimised to have a section that can pass through a 600 mm manhole with a superstructure 3 mounted.

In fact, the undercarriage 1 must comply with very stringent limits in terms of dimensions in order to be able to pass through the manholes to enter the tanks (usually DN 600mm). A special execution of a hydraulic motor 8 with a synchronized double shaft allows the right and left tracks 7 to be hauled with characteristics of high towing torque at low revs in order to move forward very slowly, and maintaining the protections necessary to work in a certified manner in environments at risk of explosion.

The system is equipped with anti-rollover hydraulic suspensions, with the possibility of lowering the hydraulic suspension at the end of the stroke to reduce the dimensions of the machine to a minimum in order to pass through a D.600 opening. Once the machine has passed beyond the entrance, the suspensions go back up allowing the suspensions to compensate.

The vertical movement also achieves the purpose of lifting the superstructure rigging 3 to overcome any obstacles placed in front of and behind the track 7 and allow it to deal with the ramp 9 necessary to enter and exit the tank.

To obtain the aforementioned characteristics, it is advantageously envisaged that the undercarriage system can be fitted with a frame (which corresponds to the structure of the carriage 5) for housing the superstructure 3.

So each system includes:
- a supporting frame (structure of the carriage 5) on which the superstructure 3 is fixed;
- a front undercarriage 1 with its own first actuator 6 for rotating the first lever 4 for raising the oscillating block composed of the first mechanical joint 2;
- a first hydraulic cylinder 10, acting on said first mechanical joint 2, for steering the front undercarriage 1;
- a rear undercarriage 1 with its own second actuator 6 for rotating the second lever 4 for raising the oscillating block composed of the second mechanical joint 2;
- a second hydraulic cylinder 10, acting on said second mechanical joint 2, for steering the rear undercarriage 1.

The configurations obtainable with the aforementioned structure are:
- a lowered supporting frame with blocking of track oscillations and enablement of the steering;
- a raised supporting frame with enablement of the oscillations of the tracks;
- a lifting of the supporting frame at the front to deal with the access ramp.

Each individual undercarriage is a unit consisting of:
- double hydraulic motor 8 with synchronized shaft for towing the two side tracks 7;
- carriage with 3-wheel drive/support/ tightener track 7;
- rubber track 7 with tread for traction;
- lifting linkage of the combined longitudinal rotation/oscillation block which includes a hydraulic actuator 6 for lifting the lever 4 and a lever 4 interposed between the structure of the carriage 5 and the mechanical joint 2;
- a central mechanical joint 2 for rotating the undercarriage;
- a free longitudinal oscillation pin of the undercarriage 1 in the direction of travel.

With the aforementioned structuring of each individual undercarriage 1 the following steering configurations are obtained, made possible by the fact that the two undercarriages 1 are in fact independent, i.e. the steering of the front undercarriage 1 is independent of the steering of the rear undercarriage 1.

Therefore, based on the operator's commands, we can have three types of steering:
- the two undercarriages 1 can turn in the opposite way; in order to make the vehicle change direction with a small curvature radius (double steering axle);
- of the two undercarriages 1 only the rear one can steer, keeping the front undercarriage not steered; so that the vehicle can change direction with a wide curvature radius (single steering axle)
- the two undercarriages 1 can turn synchronously; so as to make the vehicle advance obliquely (crab steering).

## Claims

1. Self-propelled device for entering and moving specific equipment inside confined environments with a muddy sediment on the bottom, said self-propelled device comprises two undercarriages (1) equipped with tracks (7) that are spaced apart from each other and in succession, which together support at the top connecting devices for the transport of rigid long equipment, said connecting devices comprise at least one hydraulic cylinder (10), which acts on a mechanical joint (2) for the rotation that realises the steering of the front undercarriage (1) and the rear undercarriage (1), handling them as two steering axles;
**characterised by** the fact that
said self-propelled device comprises at least one undercarriage (1) which has a lever (4), hinged by a first end to the structure (5) of the undercarriage (1) and hinged at the opposite end to said connecting devices, where said lever (4) is induced to move according to a rotation movement by a hydraulic actuator (6) hinged on said structure (5) of the undercarriage (1);
said lever (4) is rotated by a hydraulic actuator (6) joined in a first point of application to the structure (5) of the undercarriage and in a second point of application to said lever (6), where said lever (6), after a partial rotation, is able to lift said mechanical joint (2);
said mechanical joint (2) is hinged in a free oscillating manner on the end of said lever (4).

2. Self-propelled device according to claim 1, **characterised by** the fact that the two undercarriages (1) comprise a structure (5) of the carriage with tracks (7) on the side, which is joined at the top by means of the aforesaid connecting devices to a rigid longitudinal superstructure (3) for transporting the equipment.

3. Self-propelled device according to the previous claim, **characterised by** the fact that each of the two tracks (7) of each undercarriage (1) is independent and activated remotely, and/or with differentiated speed of movement for steering in combination with the rotation of said mechanical joint (2).

4. Self-propelled device according to claim 1, **characterised by** the fact that each track (7) of an undercarriage (1) is articulated with respect to the structure (5) of the undercarriage (1) according to a movement along the longitudinal plane of the undercarriage (1).

5. Self-propelled device according to claim 1, **characterised by** the fact that the said constraint between the structure (5) of the undercarriage (1) and said rigid longitudinal superstructure (3) is a basic bearing by means of which the rotation of the undercarriage (1) itself occurs during the steering movement.

6. Self-propelled device according to one or more of the preceding claims, **characterised by** the fact that the central part of said mechanical joint (2) is crossed by the pipes of the oleodynamic remote controls for the activation and/or operation of the undercarriage (1) and/or the apparatus supported by said rigid longilinear superstructure (3).

## Patentansprüche

1. Selbstfahrende Vorrichtung zum Einfahren und Bewegen bestimmter Ausrüstungen in engen Umgebungen mit schlammigem Boden, wobei die selbstfahrende Vorrichtung zwei Fahrwerke (1) umfasst, die mit Raupen (7) ausgestattet sind, die voneinander beabstandet und nacheinander angeordnet sind, die zusammen oben Verbindungsvorrichtungen für den Transport von starrer, langer Ausrüstung tragen, wobei die Verbindungsvorrichtungen mindestens einen Hydraulikzylinder (10) umfassen, der auf ein mechanisches Gelenk (2) einwirkt, das die Lenkung des Vorderfahrwerks (1) und des Hinterfahrwerks (1) umsetzt, wobei sie wie zwei Lenkachsen funktionieren;
**dadurch gekennzeichnet, dass**
die selbstfahrende Vorrichtung mindestens ein Fahrwerk (1) umfasst, das einen Hebel (4) aufweist, der mit einem ersten Ende an der Struktur (5) des Fahrwerks (1) und mit dem gegenüberliegenden Ende an den Verbindungsvorrichtungen angelenkt ist, wobei der Hebel (4) durch ein hydraulisches Stellglied (6), das an der Struktur (5) des Fahrwerks (1) angelenkt ist, zu einer Drehbewegung veranlasst wird;
**dadurch gekennzeichnet, dass** der Hebel (4) durch ein hydraulisches Stellglied (6) gedreht wird, das in einem ersten Punkt mit der Struktur (5) des Fahrwerks und in einem zweiten Punkt mit dem Hebel (6) verbunden ist, wobei der Hebel (6) nach einer Teildrehung das mechanische Gelenk (2) anheben kann;
das mechanische Gelenk (2) frei schwingend an dem Ende des Hebels (4) angelenkt ist.

2. Selbstfahrende Vorrichtung nach Anspruch 1, **dadurch gekennzeichnet, dass** die beiden Fahrwerke (1) eine Struktur (5) des Wagens mit seitlichen Raupen (7) umfassen, die oben mittels der vorgenannten Verbindungsvorrichtungen mit einem starren länglichen Überbau (3) für den Transport der Ausrüstung verbunden ist.

3. Selbstfahrende Vorrichtung nach dem vorstehenden Anspruch, **dadurch gekennzeichnet, dass** jede der beiden Raupen (7) jedes Fahrwerks (1) unabhängig ist und aus der Ferne aktiviert wird, und/oder mit differenzierter Bewegungsgeschwindigkeit für die Lenkung in Verbindung mit der Drehung des mechanischen Gelenks (2).

4. Selbstfahrende Vorrichtung nach Anspruch 1, **dadurch gekennzeichnet, dass** jede Raupe (7) eines Fahrwerks (1) in Bezug auf die Struktur (5) des Fahrwerks (1) entsprechend einer Bewegung entlang der Längsebene des Fahrwerks (1) gelenkig ist.

5. Selbstfahrende Vorrichtung nach Anspruch 1, **dadurch gekennzeichnet, dass** die Verbindung zwischen der Struktur (5) des Fahrwerks (1) und dem starren länglichen Überbau (3) ein Basislager ist, durch das die Drehung des Fahrwerks (1) selbst während der Lenkbewegung erfolgt.

6. Selbstfahrende Vorrichtung nach einem oder mehreren der vorstehenden Ansprüche, **dadurch gekennzeichnet, dass** der mittlere Teil des mechanischen Gelenks (2) von den Leitungen der öldynamischen Fernsteuerungen für die Aktivierung und/oder den Betrieb des Fahrwerks (1) und/oder der von dem starren, länglichen Überbau (3) getragenen Vorrichtung durchquert wird.

## Revendications

1. Dispositif automoteur pour l'entrée et le mouvement d'équipement spécifique, à l'intérieur d'environnements confinés par des sédiments boueux sur le fond, ledit dispositif automoteur comprend deux trains de roulement (1) équipés de chenilles (7) espacées et en succession qui supportent ensemble, au-dessus, des moyens de liaison pour le transport d'un engin longiligne et rigide, lesdits moyens de liaison comprennent au moins un cylindre hydraulique (10) qui agit sur une rotule mécanique (2) pour la rotation relative au pilotage du train de roulement avant (1) et du train de roulement arrière (1), les gérant comme deux essieux de pilotage ; **caractérisé par le fait que**
ledit dispositif automoteur comprend au moins un train de roulement qui comprend un levier (4) articulé à une première extrémité de la structure (5) du train de roulement (1) et articulé à l'extrémité opposée desdits moyens de liaison, où ledit levier (4) est amené à se déplacer selon un mouvement de rotation par un actionneur hydraulique (6) articulé sur ladite structure (5) du train de roulement (1) ; ledit levier (4) est entraîné en rotation grâce à un actionneur hydraulique (6) associé en un premier point d'application à la structure (5) du train de roulement et en un second point d'application audit levier (6), où ledit levier (6) est apte à soulever ladite rotule mécanique (2) après une rotation partielle ; ladite rotule mécanique (2) est articulée de manière oscillante sur l'extrémité dudit levier (4).

2. Dispositif automoteur selon la revendication 1 **caractérisé par le fait que** les deux trains de roulement (1) comprennent une structure (5) du train pourvue latéralement de chenilles (7) et est associée au-dessus à une superstructure (3) longiligne et rigide pour le transport du matériel grâce à l'intermédiaire des moyens de liaison susmentionnés.

3. Dispositif automoteur selon la revendication précédente **caractérisé par le fait que** chacune des deux chenilles (7) de chaque train de roulement (1) est indépendante et actionnée à distance, et/ou à vitesse de déplacement différenciée pour le pilotage en combinaison avec la rotation de ladite rotule mécanique (2).

4. Dispositif automoteur selon la revendication 1 **caractérisé par le fait que** chaque chenille (7) d'un train de roulement (1) est articulée par rapport à la structure (5) du train de roulement (1) selon un mouvement le long du plan longitudinal du train de roulement (1).

5. Dispositif automoteur selon la revendication 1 **caractérisé par le fait que** ladite contrainte entre la structure (5) du train de roulement (1) et ladite superstructure longiligne et rigide (3) est un palier de base au moyen duquel la rotation du train de roulement (1) même s'effectue durant le mouvement de pilotage.

6. Dispositif automoteur selon une ou plusieurs des revendications précédentes **caractérisé par le fait que** la partie centrale de ladite rotule mécanique (2) est traversée par les tuyaux des télécommandes oleodynamiques pour l'activation et/ou le fonctionnement du train de roulement (1) et/ou de l'équipement supporté par ladite superstructure (3) longiligne et rigide.
